(19) Europäisches Patentamt
European Patent Office
Office européen des brevets

(11) **EP 4 223 839 A1**

(12) **EUROPEAN PATENT APPLICATION**
published in accordance with Art. 153(4) EPC

(43) Date of publication:
**09.08.2023 Bulletin 2023/32**

(21) Application number: **21875578.3**

(22) Date of filing: **28.09.2021**

(51) International Patent Classification (IPC):
**C08L 23/00** (2006.01)     **C08L 23/26** (2006.01)
**C08L 33/04** (2006.01)

(52) Cooperative Patent Classification (CPC):
**C08L 23/00; C08L 23/26; C08L 33/04**

(86) International application number:
**PCT/JP2021/035539**

(87) International publication number:
**WO 2022/071277 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020165181**

(71) Applicant: **Zeon Corporation
Tokyo 100-8246 (JP)**

(72) Inventor: **WATANABE, Masashi
Tokyo 100-8246 (JP)**

(74) Representative: **Beckmann, Claus
Kraus & Weisert
Patentanwälte PartGmbB
Thomas-Wimmer-Ring 15
80539 München (DE)**

(54) **RESIN COMPOSITION**

(57)     To provide such a resin composition, that even though it contains hollow particles, when it is molded into a molded body, a deterioration in the physical properties of the molded body is suppressed. A resin composition comprising: a thermoplastic plastomer having an acid value of less than 3.0 mgKOH/g, hollow particles which comprise a shell containing a resin and a hollow portion surrounded by the shell and which contain, as the resin, a polymer in which from 30 parts by mass to 100 parts by mass of a crosslinkable monomer unit is contained in 100 parts by mass of all monomer units, and an acid-modified polyolefin-based resin having an acid value of 3.5 mgKOH/g or more.

EP 4 223 839 A1

**Description**

Technical Field

The present disclosure relates to a resin composition. More specifically, the present disclosure relates to a resin composition containing hollow particles.

Background Art

Hollow particles (hollow resin particles) are particles each of which has a hollow in its inside, and they can scatter light well and can reduce light transmissivity as compared to solid particles in which their interiors are practically filled with resin; hence, hollow particles are widely used in the applications of, for example, aqueous coating materials and paper coating compositions, as organic pigments and masking agents excellent in optical properties such as opacity and whiteness. Also, hollow particles are used as weight reducing materials, heat insulation materials or the like for resins and coating materials, which are used in various kinds of fields such as the automotive field, the electronic field, the electric field and the architecture field.

In Patent Literature 1, the applicant of the present application discloses a resin composition containing a thermoplastic plastomer and hollow resin particles. The hollow resin particles contained in the resin composition disclosed in Patent Literature 1, have a high void ratio and are lightweight, and since the shell of the hollow resin particles is formed of a resin having a high crosslinkable monomer ratio, the thermoplasticity of the shell is low, and, even at high temperatures, the hollow resin particles keep high mechanical strength and are less likely to collapse. Accordingly, in the mold processing of the resin composition disclosed in Patent Literature 1, the hollow resin particles show a small change in the void ratio, and a lightweight molded body can be stably molded by use of the resin composition.

Citation List

Patent Literature

Patent Literature 1: International Publication No. WO2020/066704

Summary of Invention

Technical Problem

However, a conventional resin composition containing resin and hollow particles has the following problem: when the resin composition is molded into a molded body, depending on the type of the resin or on the production condition of the resin composition or molded body, its physical properties such as tensile strength and flexural strength decrease compared to a resin composition not containing hollow particles.

In light of the above circumstances, an object of the present disclosure is to provide such a resin composition, that even though it contains hollow particles, when it is molded into a molded body, a deterioration in the physical properties of the molded body is suppressed.

Solution to Problem

The present disclosure provides a resin composition comprising:

a thermoplastic plastomer having an acid value of less than 3.0 mgKOH/g,
hollow particles which comprise a shell containing a resin and a hollow portion surrounded by the shell and which contain, as the resin, a polymer in which from 30 parts by mass to 100 parts by mass of a crosslinkable monomer unit is contained in 100 parts by mass of all monomer units, and
an acid-modified polyolefin-based resin having an acid value of 3.5 mgKOH/g or more.

In the resin composition of the present disclosure, a content of the acid-modified polyolefin-based resin is preferably from 10 parts by mass to 150 parts by mass, with respect to 100 parts by mass of the hollow particles.

In the resin composition of the present disclosure, a weight-average molecular weight of the acid-modified polyolefin-based resin is preferably 15,000 or more.

In the resin composition of the present disclosure, the acid-modified polyolefin-based resin is preferably a carboxylic acid-modified polyolefin-based resin.

In the resin composition of the present disclosure, the thermoplastic plastomer is preferably a polyolefin-based resin.

Advantageous Effects of Invention

According to the present disclosure, such a resin composition can be provided, that even though it contains hollow particles, when it is molded into a molded body, a deterioration in the physical properties of the molded body is suppressed.

Brief Description of Drawings

In the accompanying drawings,

FIG. 1 is a schematic diagram showing an embodiment of the production method of the hollow particles used in the present disclosure, and
FIG. 2 is a schematic diagram showing an embodiment of a suspension in a suspension preparation step.

Description of Embodiments

In the present disclosure, "A to B" in a numerical range is used to describe a range in which the numerical value A is included as the lower limit value and the numerical value B is included as the upper limit value.
Also in the present disclosure, (meth)acrylate means each of acrylate and methacrylate; (meth)acryl means each of acryl and methacryl; and (meth)acryloyl means each of acryloyl and methacryloyl.
Hereinafter, the resin composition of the present disclosure and the molded body of the resin composition of the present disclosure will be described in order.

1. Resin composition

The resin composition of the present disclosure comprises:

a thermoplastic plastomer having an acid value of less than 3.0 mgKOH/g,
hollow particles which comprise a shell containing a resin and a hollow portion surrounded by the shell and which contain, as the resin, a polymer in which from 30 parts by mass to 100 parts by mass of a crosslinkable monomer unit is contained in 100 parts by mass of all monomer units, and
an acid-modified polyolefin-based resin having an acid value of 3.5 mgKOH/g or more.

A conventional resin composition containing resin and hollow particles has the following tendency: when the resin composition is molded into a molded body, the physical properties of the molded body such as tensile strength, flexural strength and flexural modulus, decrease compared to a resin composition not containing hollow particles. The reason why the physical properties such as strength against external force decrease in the molded body of the conventional resin composition containing the resin and the hollow particles is considered that the strength of the interface between the resin and the hollow particles is relatively low because the adhesion of the interface between the resin and the hollow particles is low.
The resin composition of the present disclosure contains the acid-modified polyolefin-based resin in combination with the thermoplastic plastomer as the resin and the hollow particles. The polarity of the polyolefin moiety of the acid-modified polyolefin-based resin is relatively low, and the polarity of the acid-modified moiety is relatively high. Meanwhile, the polarity of the thermoplastic plastomer is generally low compared to the hollow particles. Accordingly, the polyolefin moiety of the acid-modified polyolefin-based resin has good affinity for the thermoplastic plastomer, and the acid-modified moiety of the acid-modified polyolefin-based resin has good affinity for the hollow particles. In the resin composition of the present disclosure which contains such an acid-modified polyolefin-based resin, such a thermoplastic plastomer and such hollow particles, it is estimated that the acid-modified polyolefin-based resin is likely to get between the thermoplastic plastomer and the hollow particles. In the molded body of the resin composition of the present disclosure, it is estimated that the molded body is likely to have a structure such that the thermoplastic plastomer is present around the hollow particles via the acid-modified polyolefin-based resin. The reason why a deterioration in the physical properties of the molded body is suppressed is presumed that a part with relatively low strength is less likely to occur in the molded body of the resin composition of the present disclosure because adhesion between the hollow particles and the acid-modified polyolefin-based resin and adhesion between the thermoplastic plastomer and the acid-modified polyolefin-based resin are good.

The hollow particles contained in the resin composition of the present disclosure, comprises the shell containing the polymer in which the ratio of the crosslinkable monomer unit is high. Accordingly, the thermoplasticity of the shell is low, and the mechanical strength of the hollow particles is high even at high temperatures. Consequently, in the mold processing of the resin composition of the present disclosure, the hollow particles are less likely to collapse even in a high-temperature and high-pressure environment, and a change in the void ratio of the hollow particles is small.

Therefore, in the mold processing the resin composition of the present disclosure, a collapse of the hollow particles is suppressed irrespective of mold processing conditions such as extrusion molding and injection molding, and a lightweight molded body can be molded by use of the resin composition of the present disclosure.

Since the hollow particles contained in the resin composition of the present disclosure are less likely to collapse even in a high-temperature and high-pressure environment, the resin composition of the present disclosure offers a wide range of applicable mold processing conditions.

Hereinafter, the thermoplastic plastomer, hollow particles and acid-modified polyolefin-based resin contained in the resin composition of the present disclosure, will be described in order.

[Thermoplastic plastomer]

The resin composition of the present disclosure contains the thermoplastic plastomer as the resin.

In general, a plastomer means a material characterized in that it exhibits no or almost no elastic deformation and easily causes plastic deformation. In contrast, an elastomer means a material characterized in that when external force is applied thereto, it instantly deforms depending on the external force, and when it is released from the external force, it recovers the original shape in a short time.

In the present disclosure, the "thermoplastic plastomer" means a polymer characterized in that it can be easily fluidized and deformed by heating and it can be fixed in the deformed shape by cooling.

In the present disclosure, typically, such a material can be used as the thermoplastic plastomer, that when the original size is regarded as 100% in a tensile test, it can be extended up to 200% at room temperature (20°C) by a small external force, and even after it is released from the external force, the size does not return to less than 130%. In particular, the small external force means an external force having a tensile strength of from 1 MPa to 100 MPa. More specifically, the following polymer can be used as the thermoplastic plastomer: according to the permanent set testing of JIS K 6262-1997, in a tensile test at 20°C, a specimen in the dumbbell No. 4 shape defined in JIS K 6251-1993 can be extended twice the gauge length before extension, and in the case where the specimen is extended twice the gauge length before extension and retained in that state for 60 minutes, it exhibits a permanent set of 30% or more 5 minutes after it is released from the tensile external force.

As the thermoplastic plastomer, thermoplastic resins applicable to conventionally-known mold processing, can be widely used. As the thermoplastic resins, examples include, but are not limited to, polyvinyl chloride; polyvinylidene chloride; polyvinyl alcohol; an ethylene copolymer such as ethylene-vinyl alcohol copolymer, ethylene-vinyl acetate copolymer, ethylenemethyl (meth)acrylate copolymer, ethylene-ethyl (meth)acrylate copolymer and ethylene-butyl (meth)acrylate copolymer; a polyolefin-based resin such as a polyethylene-based resin (e.g., low density polyethylene (LDPE), linear low density polyethylene (LLDPE), ultra low density polyethylene (ULDPE), medium density polyethylene, high density polyethylene (HDPE)), a polypropylene-based resin (e.g., polypropylene homopolymer (PP homopolymer), random polypropylene (random PP), block polypropylene (block PP)), a polybutene-based resin, a polycycloolefin and a propylene-$\alpha$-olefin copolymer; a styrene-based copolymer such as styrene-acrylonitrile copolymer and styrene-buta-diene-acrylonitrile copolymer; polystyrene; polyterpene; polyacetal; polymethyl (meth)acrylate; cellulose acetate; polycarbonate; a polyester resin such as polyethylene terephthalate and polybutylene terephthalate; thermoplastic polyurethane; polytetrafluoroethylene resin (PTFE); an ionomerbased resin such as an ethylene-based ionomer, an urethane-based ionomer, a styrene-based ionomer and a fluorine-based ionomer; polyacetal; and polyphenylene sulfide. These thermoplastic plastomers may be used alone or in combination of two or more.

The thermoplastic plastomer contained in the resin composition of the present disclosure preferably contains the polyolefin-based resin, from the viewpoint of excellent affinity for the acid-modified polyolefin-based resin and increasing the mechanical strength of the molded body.

The polyolefin-based resin of the present disclosure includes a polymer of one kind of olefin, a copolymer of two or more kinds of olefins, and a copolymer of one or more kinds of olefins and one or more kinds of other monomers. When the polyolefin-based resin is a copolymer of one or more kinds of olefins and one or more kinds of other monomers, the copolymerization ratio of the olefins is preferably 50% by mass or more.

As the polyolefin-based resin, examples include, but are not limited to, the above-described polyethylene-based resins, the above-described polypropylene-based resins, the above-described polybutene-based resins, the above-described polycycloolefins, and the above-described propylene-$\alpha$-olefin copolymers. Of them, the polyethylene-based resins, the polypropylene-based resins and the propylene-$\alpha$-olefin copolymers are preferred, and the polypropylene-based resins are particularly preferred.

For example, the polyethylene-based resin may be a copolymer of ethylene and a small amount of olefin other than ethylene or a small amount of another monomer. The same applies to the polypropylene-based resin and the polybutene-based resin. The polypropylene-based resin may be a copolymer of propylene and a small amount of olefin other than propylene or a small amount of another monomer. The polybutene-based resin may be a copolymer of butene and a small amount of olefin other than butene or a small amount of another monomer. The propylene-α-olefin copolymer is a copolymer of propylene and an α-olefin other than propylene, or it may be a copolymer of propylene, an α-olefin other than propylene, and a small amount of another monomer. For the small amount of another monomer, the copolymerization ratio of the comonomer may be 10% by mass or less, or may be 5% by mass or less, for example.

As the olefin used to synthesize the polyolefin-based resin, an alkene having 2 to 30 carbon atoms is preferred, at least one selected from alkenes having 2 to 4 carbon atoms and α-olefins having 5 to 30 carbon atoms is more preferred, and at least one selected from α-olefins having 2 to 10 carbon atoms is still more preferred.

As another monomer that is different from the olefin that may be used to synthesize the polyolefin-based resin, examples include, but are not limited to, a monomer having 4 to 30 carbon atoms and an unsaturated bond that is copolymerizable with olefin. As the monomer, examples include, but are not limited to, vinyl acetate.

In the propylene-α-olefin copolymer, the copolymerization ratio of the propylene and the α-olefin is not particularly limited. The copolymerization ratio of the propylene is preferably from 50% by mass to 90% by mass, and more preferably from 70% by mass to 90% by mass. As the α-olefin used in the propylene-α-olefin copolymer, an α-olefin having 2 to 6 carbon atoms is preferred, and ethylene and butene are particularly preferred.

The acid value of the thermoplastic plastomer is less than 3.0 mgKOH/g, and preferably less than 2.5 mgKOH/g. When the acid value of the thermoplastic plastomer is less than the upper limit value, the water absorption rate of the thermoplastic plastomer is small. Accordingly, the thermoplastic plastomer is advantageous in that it is less affected by the humidity environment, has stable chemical properties, has excellent electrical properties, and has a very small dielectric constant and a very small power factor in the high-frequency range. However, the thermoplastic plastomer has low affinity for the hollow particles. Accordingly, when the thermoplastic plastomer is used in a conventional resin composition containing hollow particles and the resin composition is molded into a molded body, the physical properties of the molded body are likely to deteriorate. Meanwhile, for the resin composition of the present disclosure, though the thermoplastic plastomer having an acid value that is less than the upper limit value is used, when the resin composition is molded into a molded body, a deterioration in the physical properties of the molded body can be suppressed.

The lower limit of the acid value of the thermoplastic plastomer is not particularly limited, and it may be 0 mgKOH/g or more.

In the present disclosure, the acid value of resin is a value measured by the following steps (i) to (iii) according to JIS K0070-3.1 Neutralization titration method.

(i) First, 1 g of a measurement sample is dissolved in 100 g of xylene of which temperature is adjusted to 100°C.
(ii) At the same temperature, using phenolphthalein as an indicator, titration is carried out with a 0.1 mol/L potassium hydroxide ethanol solution (product name: 0.1 mol/L ETHANOLIC POTASSIUM HYDROXIDE SOLUTION, manufactured by: Wako Pure Chemical Industries, Ltd.)
(iii) The amount of the potassium hydroxide required for the titration is converted to milligrams (mg), and the acid value (unit: mgKOH/g) is calculated.

The solubility parameter (SP value) of the thermoplastic plastomer is preferably 13 $(cal/cm^3)^{1/2}$ or less, more preferably 12 $(cal/cm^3)^{1/2}$ or less, and still more preferably 10 $(cal/cm^3)^{1/2}$ or less. The thermoplastic plastomer having an SP value that is equal to or less than the upper limit value, has a small water absorption rate. Accordingly, the thermoplastic plastomer is advantageous in that it is less affected by the humidity environment, has excellent electrical properties, and has a very small dielectric constant and a very small power factor in the high-frequency range. However, the thermoplastic plastomer has low affinity for the hollow particles. Accordingly, when the thermoplastic plastomer is used in a conventional resin composition containing hollow particles and the resin composition is molded into a molded body, the physical properties of the molded body are likely to deteriorate. Meanwhile, for the resin composition of the present disclosure, though the thermoplastic plastomer having an acid value that is less than the upper limit value, is used, when the resin composition is molded into a molded body, a deterioration in the physical properties of the molded body can be suppressed. The lower limit of the SP value of the thermoplastic plastomer is not particularly limited. It is preferably 6 $(cal/cm^3)^{1/2}$ or more, and more preferably 7 $(cal/cm^3)^{1/2}$ or more. It should be noted that 1 $(cal/cm^3)^{1/2}$ can be converted to 2.05 $(J/cm^3)^{1/2}$ or 2.05 $(MPa)^{1/2}$. Also in the present disclosure, the SP value of resin is defined as a value obtained by the method described in the following: J. Brandrup et al., "Polymer Handbook Fourth Edition", John Wiley & Sons, Inc., 1999, pp. 675-714. Any resin not described in this reference is defined to have an SP value ($\delta$) calculated by the following formula, based on the molar attraction constants of various kinds of atomic groups proposed by Small and from the sum ($\Sigma$G) of the molar-attraction constants (G), molecular weight (M) and specific gravity (d):

$$\delta = \Sigma G/V = d\Sigma G/M$$

(where $\delta$ is SP value; V is specific volume; M is molecular weight; and d is specific gravity).

In the resin composition of the present disclosure, the content of the thermoplastic plastomer is not particularly limited. It is generally from 50% by mass to 95% by mass, and preferably from 60% by mass to 90% by mass. When the content of the thermoplastic plastomer is equal to or more than the lower limit value, the moldability of the resin composition can be excellent, and the mechanical strength of the obtained molded body can be increased. When the content of the thermoplastic plastomer is equal to or less than the upper limit value, the hollow particles and the acid-modified polyolefin-based resin can be sufficiently contained in the resin composition. Accordingly, when the resin composition is molded into a molded body, a deterioration in the physical properties of the molded body can be suppressed; the mechanical strength of the molded body can be increased; and an excellent molded body weight reduction effect, is exerted.

[Hollow particles]

The hollow particles contained in the resin composition of the present disclosure are particles which comprise a resincontaining shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that can be clearly distinguished from many minute spaces uniformly dispersed in the porous structure.

The hollow particles may have one or two or more hollow portions. The shell of the hollow particles and, when the hollow particles have two or more hollow portions, a partition separating the adjacent hollow portions from each other may be porous. The interior of the particles preferably has only one hollow portion in order to maintain good balance between the high void ratio of the hollow particles and the mechanical strength of the hollow particles.

The hollow portion of the hollow particles can be determined by, for example, SEM observation of a cross section of the particles or TEM observation of the particles as they are.

The hollow portion of the hollow particles is preferably filled with gas such as air.

In general, there are hollow particles in which the shell does not have a communication hole communicating between the hollow portion and the external space of the particles, and hollow particles in which the shell has one or two or more communication holes and the hollow portion communicates with the outside of the particles via the communication holes. In general, depending on the size of the hollow particles, the diameter of the communication hole is approximately from 10 nm to 500 nm. In some cases, the hollow particles have a shell defect in a crack form, which is very large relative to the size of the particles. In general, depending on the size of the hollow particles, a crack having a length of 1 um or more is recognized as the shell defect, since it significantly deteriorates the strength of the hollow particles.

In SEM observation of the hollow particles contained in the resin composition of the present disclosure, the number of the hollow particles having a communication hole or shell defect is preferably 5 or less per 100 of the hollow particles, from the point of view that the hollow particles are less likely to collapse in the mold processing of the resin composition.

The lower limit of the void ratio of the hollow particles is preferably 50% or more, more preferably 53% or more, still more preferably 55% or more, even more preferably 58% or more, and particularly preferably 60% or more. When the void ratio of the hollow particles is equal to or more than the lower limit value, the hollow particles can achieve weight reduction since the ratio of the hollow portion is high. The upper limit of the void ratio of the hollow particles is preferably 90% or less, more preferably 85% or less, and still more preferably 80% or less. When the void ratio of the hollow particles is equal to or less than the upper limit value, a decrease in the strength of the hollow particles is suppressed.

The void ratio of the hollow particles is calculated by the following formula (0) where $D_1$ is the apparent density of the hollow particles and $D_0$ is the true density thereof.

$$\text{Void ratio (\%)} = 100-[\text{Apparent density } D_1]/[\text{True density } D_0]\times100 \quad \text{Formula (0)}$$

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

$$\text{Apparent density } D_1 = [\text{Mass of the hollow particles}]/(100-[\text{Mass of the isopropanol}]/[\text{Specific gravity of the isopropanol at the measuring temperature}]) \quad \text{Formula (I)}$$

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

$$\text{True density } D_0 = [\text{Mass of the pulverized hollow particles}]/(100-[\text{Mass of the isopropanol}]/[\text{Specific gravity of the isopropanol at the measuring temperature}]) \quad \text{Formula (II)}$$

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The hollow particles preferably do not exhibit a glass transition temperature (Tg) at 250°C or less. When the hollow particles do not exhibit a glass transition temperature (Tg) at 250°C or less, it is considered that the hollow particles are not likely to deform or collapse when heated.

The glass transition temperature can be measured by differential scanning calorimetry (DSC).

For the volume-based average particle diameter (volume average particle diameter) of the hollow particles, the lower limit is preferably 1.0 um or more, more preferably 3.0 um or more, still more preferably 4.0 um or more, and particularly preferably 4.5 um or more. The upper limit is preferably 60.0 um or less, more preferably 55.0 um or less, and still more preferably 50.0 um or less.

When the volume average particle diameter of the hollow particles is 1.0 pm or more, the desired void ratio is obtained. Accordingly, the hollow particles can achieve weight reduction. Further, when the volume average particle diameter of the hollow particles is 60.0 pm or less, the hollow particles are not likely to collapse. Accordingly, the hollow particles have high compressive strength.

The particle size distribution (volume average particle diameter (Dv)/number average particle diameter (Dn) of the hollow particles is not particularly limited, and it may be from 1.00 to 2.50, for example. When the particle size distribution is 2.50 or less, particles which have small variation in compressive strength characteristics and heat resistance between the particles, can be obtained. When the particle size distribution is 2.50 or less, a product having uniform thickness can be produced in the case of producing a product such as the molded body described later.

The volume average particle diameter (Dv) and number average particle diameter (Dn) of the hollow particles can be found as follows, for example. The particle diameter of each of the hollow particles is measured with a laser diffraction particle size distribution measuring apparatus; the number average and volume average of the particle diameters are calculated; and the obtained values can be used as the number average particle diameter (Dn) and volume average particle diameter (Dv) of the particles. The particle size distribution is found by dividing the volume average particle diameter by the number average particle diameter.

The shape of the hollow particles is not particularly limited, as long as the hollow portion is formed in the interior. As the shape, examples include, but are not limited to, a spherical shape, an ellipsoidal shape and an irregular shape. Among them, a spherical shape is preferable in terms of ease of production.

The average circularity of the hollow particles may be from 0.950 to 0.995.

In the present disclosure, the term "circularity" is defined as a value obtained by dividing the perimeter of a circle having the same area as the projected area of a particle image, by the perimeter of the projected image of the particle. Also in the present disclosure, the term "average circularity" is used as a simple method for quantitatively representing the shape of the hollow particles and is the index of the degree of the surface roughness of the hollow particles. The average circularity is 1 when the hollow particles are perfectly spherical, and it gets smaller as the surface shape of the hollow particles becomes more complex.

For the shell thickness of the hollow particles of the present disclosure, the lower limit is preferably 0.1 um or more, more preferably 0.2 um or more, and still more preferably 0.3 um or more, and the upper limit is preferably 6 um or less, more preferably 5 um or less, and still more preferably 4 um or less. When the thickness of the shell of the hollow particles is equal to or more than the lower limit value, the strength of the shell increases. Meanwhile, the shell of the hollow particles of the present disclosure has such a dense structure, that acetone is less likely to permeate. Accordingly, the hollow particles are excellent in strength and less likely to collapse even when the shell thickness is equal to or less than the lower limit value and is thin.

The thickness of the shell of the hollow particles can be calculated as follows. The inner diameter r is calculated by the following formula (1) using the volume average particle diameter R and void ratio of the hollow particles, and the thickness of the shell is calculated by the following formula (2) using the inner diameter r and the volume average particle diameter R. The void ratio in the following formula (1) is a numerical value when expressed in a ratio.

$$4/3\pi \times (R/2)^3 \times \text{Void ratio} = 4/3\pi \times (r/2)^3 \quad \text{Formula (1)}$$

$$\text{Shell thickness} = (R-r)/2 \quad \text{Formula (2)}$$

The difference between the shell thickness calculated as described above and the average value of the actually measured thicknesses of 20 points of the shell, is generally within ±10% of the average value of them. Accordingly, the thickness of the shell calculated as described above can be considered as the thickness of the shell of the hollow particles.

The thickness of each point of the shell of the hollow particles, which is used to obtain the average value of the thicknesses of 20 points of the shell, can be measured by SEM observation of shell fragments obtained by breaking the hollow particles, for example.

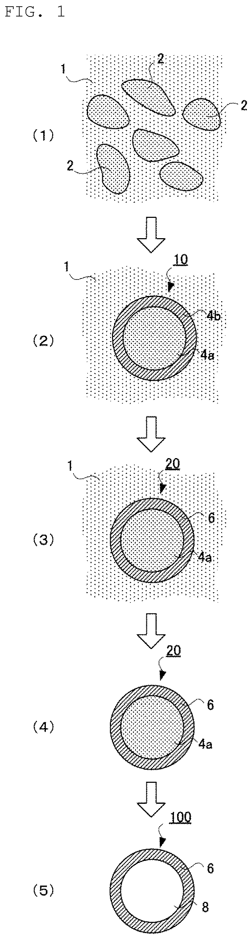

An example of the image of the shape of the hollow particles is a bag made of a thin film and inflated with gas. A cross-section of the bag is like the hollow particle 100 shown in FIG. 1 described later. In this example, one thin film is provided on the outside, and the interior is filled with gas.

The shape of the hollow particles can be determined by SEM, TEM or the like. Further, the shape of the interior of the hollow particles can be determined by SEM, TEM or the like after cutting the particles into round slices by a known method.

<Composition of shell>

The hollow particles contained in the resin composition of the present disclosure comprise the shell containing the resin, and they contain, as the resin, the polymer in which from 30 parts by mass to 100 parts by mass of the crosslinkable monomer unit is contained in 100 parts by mass of all monomer units.

A polymerizable monomer is used as a raw material of the polymer. The polymerizable monomer contains at least a crosslinkable monomer, and it may further contain a non-crosslinkable monomer. The "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used. The addition-polymerizable functional group may be the ethylenically unsaturated bond itself, or it may be a group containing an ethylenically unsaturated bond, such as a vinyl group, a (meth)acrylic group, an ethylene group and an allyl group.

In the present disclosure, the non-crosslinkable monomer is a polymerizable monomer which has only one polymerizable functional group, and the crosslinkable monomer is a polymerizable monomer which has two or more polymerizable functional groups and which forms crosslinking in resin by a polymerization reaction.

(Crosslinkable monomer unit)

The crosslinkable monomer for the crosslinkable monomer unit is not particularly limited, as long as it has two or more polymerizable functional groups. As the crosslinkable monomer, examples include, but are not limited to, a bifunctional crosslinkable monomer having two polymerizable functional groups, such as divinylbenzene, divinylbiphenyl, divinylnaphthalene, diallyl phthalate, allyl (meth)acrylate, vinyl (meth)acrylate, ethylene glycol di(meth)acrylate, diethylene glycol di(meth)acrylate, pentaerythritol di(meth)acrylate, and 2-hydroxy-3-(meth)acryloyloxypropyl (meth)acrylate, and a trifunctional or higher-functional crosslinkable monomer having three or more polymerizable functional groups, such as trimethylolpropane tri(meth)acrylate, ditrimethylolpropane tetra(meth)acrylate, pentaerythritol tri(meth)acrylate, pentaerythritol tetra(meth)acrylate, and dipentaerythritol hexa(meth)acrylate. These crosslinkable monomers may be used alone or in combination of two or more.

As the crosslinkable monomer, a hydrophilic crosslinkable monomer having a solubility of 0.3 g/L or more in distilled water at 20°C, is preferably used. When the shell of the hollow particles contains the hydrophilic crosslinkable monomer unit, an excellent effect of suppressing a deterioration in the physical properties of the molded body formed by molding the resin composition of the present disclosure, is exerted. As the hydrophilic crosslinkable monomer, examples include, but are not limited to, ethylene glycol dimethacrylate, diethylene glycol diacrylate, aryl methacrylate, vinyl methacrylate, and 2-hydroxy-3-methacryloyloxypropyl acrylate.

In 100 parts by mass of all the monomer units of the polymer, the content of the crosslinkable monomer unit is from 30 parts by mass to 100 parts by mass. The lower limit of the content of the crosslinkable monomer unit is preferably 35 parts by mass or more, more preferably 40 parts by mass or more, and still more preferably 45 parts by mass or more. The upper limit of the content of the crosslinkable monomer unit may be less than 100 parts by mass, may be 90 parts by mass or less, or may be 80 parts by mass or less. When the content of the crosslinkable monomer unit is equal to or more than the lower limit value, the mechanical properties of the shell can be improved. Accordingly, the strength of the hollow particles can be increased, and a collapse of the hollow particles in the mold processing of the resin composition and a decrease in the void ratio can be suppressed. When the content of the crosslinkable monomer unit is less than 100 parts by mass, the polymer contains the crosslinkable monomer unit in combination with the non-crosslinkable monomer unit. Since the crosslinkable monomer has several polymerizable functional groups, non-crosslinkable monomers can be linked to each other. Accordingly, when the crosslinkable monomer unit and the non-crosslinkable monomer unit are contained in combination, in some cases, the strength and heat resistance of the shell can be increased.

The content of each polymerizable monomer unit is obtained by calculating the ratio of the polymerizable monomer subjected to the polymerization reaction, from the amount of the fed polymerizable monomer at the time of polymerization and the amount of the residual polymerizable monomer at the end of the polymerization.

(Non-crosslinkable monomer)

As the non-crosslinkable monomer, for example, a monovinyl monomer is preferably used. In the present disclosure, the monovinyl monomer is a compound having one polymerizable carboncarbon double bond. As the monovinyl monomer, examples include, but are not limited to, a (meth)acrylic monovinyl monomer such as (meth)acrylic acid ester such as methyl (meth)acrylate, ethyl (meth)acrylate, butyl (meth)acrylate, 2-ethylhexyl (meth)acrylate, lauryl (meth)acrylate, glycidyl (meth)acrylate and 2-hydroxyethyl (meth)acrylate, and (meth)acrylic acid; an aromatic vinyl monomer such as styrene, vinyltoluene and $\alpha$-methylstyrene; and a monoolefin monomer such as ethylene, propylene and butylene. These non-crosslinkable monomers may be used alone or in combination of two or more.

Of them, from the viewpoint of reactivity and heat resistance, the (meth)acrylic monovinyl monomer is preferred, and at least one selected from butyl acrylate and methyl methacrylate is more preferred.

As the non-crosslinkable monomer, a hydrophilic non-crosslinkable monomer having a solubility of 0.3 g/L or more in distilled water at 20°C, is preferably used. When the shell of the hollow particles contains a hydrophilic non-crosslinkable monomer unit, the strength of the hollow particles is increased.

As the hydrophilic non-crosslinkable monomer, examples include, but are not limited to, some of the above-mentioned monovinyl monomers including a (meth)acrylic acid alkyl ester containing an alkyl group having 1 to 5 carbon atoms, such as methyl (meth)acrylate, ethyl (meth)acrylate and butyl (meth)acrylate; and a polar group-containing non-crosslinkable monomer such as (meth)acrylic acid, glycidyl (meth)acrylate and 2-hydroxyethyl (meth)acrylate. As the hydrophilic non-crosslinkable monomer, examples also include, but are not limited to, a (meth)acrylamide such as (meth)acrylamide, N-methylol (meth)acrylamide and N-butoxymethyl (meth)acrylamide and derivatives thereof; and (meth)acrylic acid nitrile.

As the polar group-containing non-crosslinkable monomer, examples include, but are not limited to, a non-crosslinkable monomer containing a polar group selected from a carboxyl group, a hydroxyl group, a sulfonic acid group, an amino group, a polyoxyethylene group and an epoxy group. As the carboxyl group-containing non-crosslinkable monomer, examples include, but are not limited to, in addition to the above-mentioned (meth)acrylic acid, an ethylenically unsaturated carboxylic acid monomer such as crotonic acid, cinnamic acid, itaconic acid, fumaric acid, maleic acid and butene tricarboxylic acid. As the hydroxyl group-containing non-crosslinkable monomer, examples include, but are not limited to, in addition to the above-mentioned 2-hydroxyethyl (meth)acrylate, 2-hydroxypropyl (meth)acrylate, 4-hydroxybutyl (meth)acrylate and. As the sulfonic acid group-containing non-crosslinkable monomer, examples include, but are not limited to, styrenesulfonic acid. As the amino group-containing non-crosslinkable monomer, examples include, but are not limited to, dimethylaminoethyl (meth)acrylate and diethylaminoethyl (meth)acrylate. As the polyoxyethylene group-containing non-crosslinkable monomer, examples include, but are not limited to, the above-mentioned methoxypolyethylene glycol (meth)acrylate. As the epoxy group-containing non-crosslinkable monomer, examples include, but are not limited to, in addition to the above-mentioned glycidyl (meth)acrylate, allyl glycidyl ether and 4-hydroxybutyl acrylate glycidyl ether.

From the viewpoint of obtaining a high effect of increasing the strength of the hollow particles, the hydrophilic non-crosslinkable monomer is preferably at least one selected from the group consisting of (meth)acrylic acid and a (meth)acrylic acid alkyl ester containing an alkyl group having 1 to 5 carbon atoms, more preferably at least one selected from the group consisting of (meth)acrylic acid and a (meth)acrylic acid alkyl ester containing an alkyl group having 1 to 4 carbon atoms, and still more preferably at least one selected from (meth)acrylic acid and methyl (meth)acrylate.

In 100 parts by mass of all the monomer units of the polymer, the content of the non-crosslinkable monomer unit is from 0 part by mass to 70 parts by mass. The term "all the monomer units of the polymer" means the total of the crosslinkable and non-crosslinkable monomer units in the polymer. When the polymer contains the non-crosslinkable monomer unit, the lower limit of the content of the non-crosslinkable monomer unit is preferably 3 parts by mass or more, more preferably 10 parts by mass or more, still more preferably 15 parts by mass or more, and particularly preferably 20 parts by mass or more. The upper limit is preferably 65 parts by mass or less, more preferably 60 parts by mass or less, still more preferably 55 parts by mass or less, and particularly preferably 45 parts by mass or less. When the polymer contains the non-crosslinkable monomer unit and the content of the non-crosslinkable monomer unit is equal to or more than the preferable lower limit value, the strength and heat resistance of the shell can be increased. When the content of the non-crosslinkable monomer unit is equal to or less than the upper limit value, the crosslinkable monomer unit can be sufficiently contained. Accordingly, the mechanical properties of the shell can be improved, and a collapse of the hollow particles can be suppressed.

The content of the polymer contained in the shell of the hollow particles, is not particularly limited. From the viewpoint of excellent strength of the hollow particles, the content of the polymer is generally 80% by mass or more, and preferably 90% by mass or more.

The shell of the hollow particles may contain a small amount of resin that is different from the polymer. As the resin that is different from the polymer, examples include, but are not limited to, a polymer in which the content of the non-crosslinkable monomer unit is more than 70% by mass, urethane resin, urethane-acrylic resin, epoxy resin and epoxy-acrylic resin. In the shell of the hollow particles, the content of the resin that is different from the polymer, is preferably 20% by mass or less, and more preferably 10% by mass or less.

As needed, in addition to the resin, the shell of the hollow particles may further contain an additive, or the like. As the additive that may be contained in the shell of the hollow particles, examples include, but are not limited to, a particle diameter control agent described later.

In the shell of the hollow particles, the content of the particle diameter control agent is not particularly limited, and it is appropriately adjusted depending on its type. The content of the particle diameter control agent is preferably from 0.0001% by mass to 10% by mass, and more preferably from 0.001% by mass to 8% by mass.

<Content of the hollow particles>

In the resin composition of the present disclosure, the content of the hollow particles is not particularly limited. The content of the hollow particles is preferably from 5% by mass to 50% by mass, more preferably from 5% by mass to 30% by mass, and still more preferably from 5% by mass to 15% by mass. When the content of the hollow particles is equal to or more than the lower limit value, the effect such as reducing the weight of the resin composition due to the hollow particles, can be improved. When the content of the hollow particles is equal to or less than the upper limit value, the thermoplastic plastomer and the acid-modified polyolefin-based resin can be sufficiently contained in the resin composition. Accordingly, when the resin composition is molded into a molded body, a deterioration in the physical properties of the molded body can be suppressed, and the mechanical properties thereof can be improved.

<Method for producing the hollow particles>

Hereinafter, an embodiment of the method for producing the hollow particles will be described. The method for producing the hollow particles of the present disclosure is not limited to the following embodiment, and it is not particularly limited.

An embodiment of the method for producing the hollow particles includes:

preparing a mixture liquid containing a polymerizable monomer, an oil-soluble polymerization initiator, a hydrocarbon solvent, a dispersion stabilizer and an aqueous medium (a mixture liquid preparation step),
suspending the mixture liquid to prepare a suspension in which droplets of a monomer composition containing the polymerizable monomer and the hydrocarbon solvent are dispersed in the aqueous medium (a suspension preparation step),

polymerizing the suspension to prepare a precursor composition containing precursor particles including the hydrocarbon solvent (a polymerization step),

carrying out solid-liquid separation of the precursor composition to obtain the precursor particles (a solid-liquid separation step), and

removing the hydrocarbon solvent from the precursor particles to obtain the hollow particles (a solvent removal step).

In the present disclosure, the hollow particles having the hollow portion filled with the hydrocarbon solvent, may be considered as the intermediate of the hollow particles in which the hollow portion is filled with gas, and they may be referred to as the "precursor particles". Also in the present disclosure, the "precursor composition" means a composition containing the precursor particles.

As described above, the present embodiment includes (1) the mixture liquid preparation step, (2) the suspension preparation step, (3) the polymerization step, (4) the solid-liquid separation step and (5) the solvent removal step. The steps of the present embodiment are not limited to the five steps, and the present embodiment may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

FIG. 1 is a schematic diagram showing an example of the production method of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production methods of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer and the hydrocarbon solvent.

The diagram (2) of FIG. 1 is a schematic cross-sectional view showing an embodiment of the suspension in the suspension preparation step. The suspension contains the aqueous medium 1 and a droplet 10 of the monomer composition dispersed in the aqueous medium 1. The droplet 10 of the monomer composition contains the polymerizable monomer and the hydrocarbon solvent; however, their distribution in the droplet is not uniform. The droplet 10 of the monomer composition has the following structure: phase separation occurs between the hydrocarbon solvent (hydrocarbon solvent 4a) and a material 4b containing the polymerizable monomer and not containing the hydrocarbon solvent; the hydrocarbon solvent 4a is distributed in the center; the material 4b not containing the hydrocarbon solvent is distributed on the surface side; and the dispersion stabilizer (not shown) is on the surface.

The diagram (3) of FIG. 1 is a schematic cross-sectional view showing an embodiment of the composition (the precursor composition) which contains the precursor particle including the hydrocarbon solvent in the hollow portion. The composition contains the aqueous medium 1 and the precursor particle (a precursor particle 20) which includes the hydrocarbon solvent 4a in the hollow portion. A shell 6 forming the outer surface of the precursor particle 20 is formed by polymerization of the polymerizable monomer in the droplet 10 of the monomer composition.

The diagram (4) of FIG. 1 is a schematic cross-sectional view showing an embodiment of the precursor particle including the hydrocarbon solvent in the hollow portion after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particle after the solvent removal step. The diagram (5) of FIG. 1 shows a state where the hydrocarbon solvent 4a has been removed from the state shown in the diagram (4) of FIG. 1. By the removal of the hydrocarbon solvent from the precursor particle including the hydrocarbon solvent in the hollow portion, a hollow particle 100 having a gas-filled hollow portion 8 in the interior of the shell 6, is obtained.

Hereinbelow, the five steps described above and other steps are described in order.

(1) Mixture liquid preparation step

The mixture liquid preparation step includes preparing the mixture liquid containing the polymerizable monomer, the oil-soluble polymerization initiator, the hydrocarbon solvent, the dispersion stabilizer and the aqueous medium. The mixture liquid preferably further contains a particle diameter control agent, from the viewpoint of appropriately controlling the particle diameter of the droplets of the monomer composition and the thickness of the shell of the obtained hollow particles.

Of them, the polymerizable monomer is the same as described above under <Composition of the shell> for the hollow particles. In addition to the polymerizable monomer described above under <Composition of the shell>, the mixture liquid may contain another polymerizable compound.

(Particle diameter control agent)

The mixture liquid preferably contains the particle diameter control agent for appropriately controlling the particle diameter of the droplets of the monomer composition. Accordingly, the particle diameter and shell thickness of the obtained hollow particles are appropriately controlled, and the hollow particles which are less likely to collapse even when the void ratio is high, can be obtained.

As the particle diameter control agent, for example, at least one selected from the group consisting of rosin acids, higher fatty acids and metal salts thereof, or a polar resin described later, can be used. In the suspension preparation step described later, the particle diameter control agent can appropriately control the particle diameter of the droplets of the monomer composition containing the polymerizable monomer and the hydrocarbon solvent. In the suspension preparation step, the droplets of the monomer composition are formed in the aqueous medium by the action of the dispersion stabilizer. In the droplets of the monomer composition, phase separation occurs between the hydrocarbon solvent and the material containing the polymerizable monomer and not containing the hydrocarbon solvent; the hydrocarbon solvent is distributed in the center; and the material not containing the hydrocarbon solvent is distributed on the surface side. When the mixture liquid contains the particle diameter control agent, the droplets are presumed to have the following structure: the particle diameter control agent is distributed in the vicinity of the surface of the droplets of the monomer composition, and the dispersion stabilizer is on the surface of the droplets. Such a material distribution structure is formed according to differences in affinity for the aqueous medium between the materials. When the mixture liquid contains the particle diameter control agent, the particle diameter of the droplets of the monomer composition can be appropriately controlled. This is thought to be caused because the droplets of the monomer composition in the suspension have the above-mentioned material distribution structure, an interaction between the dispersion stabilizer and the particle diameter control agent occurs on the surface of the droplets, and the dispersibility of the droplets by the dispersion stabilizer is changed.

The particle diameter control agent is preferably at least one selected from the group consisting of rosin acids, higher fatty acids and metal salts thereof, and more preferably at least one selected from rosin acids and alkali metal salts thereof, since the particle diameter of the droplets can be appropriately controlled with a small content of the particle diameter control agent.

The rosin acids preferably used as the particle diameter control agent can be obtained from rosin such as gum rosin, tall rosin and wood rosin.

The components contained in the rosin acids obtained from the rosin are, for example, abietic acid, dehydroabietic acid, palustric acid, isopimaric acid and pimaric acid. The component ratio of the rosin acids is diverse, and it varies depending on the type of the rosin and the type and growing area of pine which is a raw material, etc.

The rosin acids and metal salts thereof used in the present disclosure are preferably rosin acids containing 50% by mass of an abietic acid compound such as abietic acid, dehydroabietic acid, palustric acid and hydrides thereof, and alkali metal salts of the rosin acids.

The higher fatty acids used as the particle diameter control agent are preferably higher fatty acids having 10 to 25 carbon atoms in which the carbon atom of the carboxyl group is excluded. As such higher fatty acids, for example, lauric acid ($CH_3(CH_2)_{10}COOH$), tridecanoic acid ($CH_3(CH_2)_{11}COOH$), myristic acid ($CH_3(CH_2)_{12}COOH$), pentadecanoic acid ($CH_3(CH_2)_{13}COOH$), palmitic acid ($CH_3(CH_2)_{14}COOH$), heptadecanoic acid ($CH_3(CH_2)_{15}COOH$), stearic acid ($CH_3(CH_2)_{16}COOH$), arachidic acid ($CH_3(CH_2)_{18}COOH$), behenic acid ($CH_3(CH_2)_{20}COOH$) and lignoceric acid ($CH_3(CH_2)_{22}COOH$) are preferred.

As the metal used in the metal salts of the rosin acids or higher fatty acids, examples include, but are not limited to, alkali metals such as Li, Na and K, and alkaline-earth metals such as Mg and Ca. Of them, alkali metals are preferred, and at least one selected from Li, Na and K is more preferred.

When at least one selected from the group consisting of rosin acids, higher fatty acids and metal salts thereof is used as the particle diameter control agent, the total content of the rosin acids, higher fatty acids and metal salts thereof is preferably 0.0001 parts by mass or more and 0.1 parts by mass or less, more preferably 0.001 parts by mass or more and 0.01 parts by mass or less, and still more preferably 0.0015 parts by mass or more and 0.006 parts by mass or less, with respect to 100 parts by mass of the polymerizable monomer. When the total content is equal to or more than the lower limit value, the particle diameter of the hollow particles and the thickness of the shell can be easily controlled, and the strength of the hollow particles can be increased. On the other hand, when the total content is equal to or less than the upper limit value, a decrease in the content of the polymerizable monomer can be suppressed.

Accordingly, a decrease in the strength of the shell can be suppressed, and a collapse of the hollow particles can be further suppressed.

The polar resin that is preferably used as the particle diameter control agent, is a polymer containing a repeating unit which contains a heteroatom. As the polar resin, examples include, but are not limited to, an acrylic resin, a polyester resin, and a vinyl resin containing a heteroatom.

The polar resin may be a homopolymer or copolymer of a heteroatom-containing monomer, or it may be a copolymer of a heteroatom-containing monomer and a heteroatom-free monomer. When the polar resin is a copolymer of a heteroatom-containing monomer and a heteroatom-free monomer, from the viewpoint of easily controlling the particle diameter of the hollow particles, in 100% by mass of all the repeating units constituting the copolymer, the amount of the heteroatom-containing monomer unit is preferably 50% by mass or more, more preferably 70% by mass or more, and still more preferably 90% by mass or more.

As the heteroatom-containing monomer for the polar resin, examples include, but are not limited to, a (meth)acrylic monovinyl monomer which is a monomer containing a (meth)acryloyl group, such as methyl (meth)acrylate, ethyl (meth)acrylate, butyl (meth)acrylate, 2-ethylhexyl (meth)acrylate, lauryl (meth)acrylate, acrylic acid, methacrylic acid, 2-hydroxyethyl (meth)acrylate, 2-hydroxypropyl (meth)acrylate, 4-hydroxybutyl (meth)acrylate, methoxypolyethylene glycol (meth)acrylate, dimethylaminoethyl (meth)acrylate, diethylaminoethyl (meth)acrylate, glycidyl (meth)acrylate, and 4-hydroxybutyl acrylate glycidyl ether; an aromatic vinyl monomer containing a heteroatom, such as halogenated styrene and styrene sulfonate; a carboxylic acid vinyl ester monomer such as vinyl acetate; a vinyl halide monomer such as vinyl chloride; a vinylidene halide monomer such as vinylidene chloride; vinylpyridine; a carboxyl group-containing monomer such as an ethylenically unsaturated carboxylic acid monomer such as crotonic acid, cinnamic acid, itaconic acid, fumaric acid, maleic acid and butene tricarboxylic acid; and an epoxy group-containing monomer such as allyl glycidyl ether. These heteroatom-containing monomers may be used alone or in combination of two or more.

As the heteroatom-free monomer for the polar resin, examples include, but are not limited to, an aromatic vinyl monomer not containing a heteroatom, such as styrene, vinyltoluene, $\alpha$-methylstyrene and p-methylstyrene; a monoolefin monomer such as ethylene, propylene and butylene; and a diene monomer such as butadiene and isoprene. These heteroatom-free monomers may be used alone or in combination of two or more.

From the viewpoint of high compatibility with the polymerizable monomer and easily controlling the particle diameter of the hollow particles, the polar resin is preferably an acrylic resin. In the acrylic resin, with respect to 100% by mass of all the repeating units constituting the resin, the total mass of the (meth)acrylic monovinyl monomer unit is preferably 50% by mass or more, more preferably 70% by mass or more, and still more preferably 90% by mass or more. The polar resin is particularly preferably an acrylic resin such that all the repeating units constituting the resin are composed of the (meth)acrylic monovinyl monomer unit.

In the polar resin, from the viewpoint of easily controlling the particle diameter of the hollow particles, it is preferable that the heteroatom-containing monomer unit contains a polar group-containing monomer unit that contains a polar group selected from a carboxyl group, a hydroxyl group, a sulfonic acid group, an amino group, a polyoxyethylene group and an epoxy group. As the polar group-containing monomer used in the polar resin, examples include, but are not limited to, polar group-containing non-crosslinkable monomers that are the same as those that may be contained in the above-described polymerizable monomer. The polar group-containing monomers may be used alone or in combination of two or more. As the polar group contained in the polar group-containing monomer unit contained in the polar resin, a carboxyl group and a hydroxyl group are preferred, from the point of view that the particle diameter can be controlled by adding a small amount thereof.

When the polar resin contains the polar group-containing monomer unit, it is preferable that the polar group is present at the end of the main chain or that of a side chain, or the polar group is bound to the main chain or a side chain in a pendant form, from the point of view that the polar resin can be easily disposed on the outer surface of the hollow particles and that the particle diameter of the hollow particles can be easily controlled.

When the polar resin does not contain the polar group-containing monomer unit, from the viewpoint of high compatibility with the polymerizable monomer and easily controlling the particle diameter of the hollow particles, the polar resin preferably contains a monomer unit derived from a (meth)acrylic acid alkyl ester as the heteroatom-containing monomer unit. Especially from the viewpoint of high polarity, the polar resin preferably contains a monomer unit derived from a (meth)acrylic acid alkyl ester in which the alkyl group has 3 or less carbon atoms, more preferably a monomer unit derived from a (meth)acrylic acid alkyl ester in which the alkyl group is a methyl group or an ethyl group, and still more preferably a monomer unit derived from a (meth)acrylic acid alkyl ester in which the alkyl group is a methyl group.

From the viewpoint of high compatibility with the polymerizable monomer and easily controlling the particle diameter of the hollow particles, the acrylic resin as the polar resin is preferably a polymer or copolymer of polymerizable monomers for polar resin, which include 50% by mass or more of methyl methacrylate with respect to the total mass (100% by mass) of the polymerizable monomers for polar resin. In the present disclosure, the polymerizable monomer used for synthesis of the polar resin is referred to as the "polymerizable monomer for polar resin".

The polar resin can be obtained by, for example, polymerizing polymerizable monomers for polar resin, which include the heteroatom-containing monomer, by a polymerization method such as solution polymerization and emulsion polymerization.

When the polar resin is a copolymer, the copolymer may be any one of a random copolymer, a block copolymer and a graft copolymer. The polar resin is preferably a random copolymer.

From the viewpoint of increasing the solubility, the polar resin is preferably finely pulverized.

The number average molecular weight (Mn) of the polar resin is not particularly limited. The polystyrene equivalent number average molecular weight (Mn) of the polar resin measured by gel permeation chromatography (GPC) using tetrahydrofuran is preferably in a range of 3000 or more and 20000 or less, more preferably in a range of 4000 or more and 17000 or less, and still more preferably in a range of 6000 or more and 15000 or less. When the number average molecular weight (Mn) of the polar resin is equal to or more than the lower limit value, the solubility of the polar resin is increased, and the particle diameter of the hollow particles can be easily controlled. When the number average molecular weight of the polar resin is equal to or less than the upper limit value, a decrease in the strength of the shell can be suppressed.

When the polar resin is used as the particle diameter control agent, the content of the polar resin is preferably 0.1 parts by mass or more and 10 parts by mass or less, more preferably 0.3 parts by mass or more and 8.0 parts by mass or less, and still more preferably 0.5 parts by mass or more and 8.0 parts by mass or less, with respect to 100 parts by mass of the polymerizable monomer. When the content of the polar resin is equal to or more than the lower limit value, the particle diameter of the hollow particles and the thickness of the shell can be easily controlled, and the strength of the hollow particles can be increased. On the other hand, when the content of the polar resin is equal to or less than the upper limit value, a decrease in the content of the polymerizable monomer can be suppressed. Accordingly, a decrease in the strength of the shell can be suppressed, and a collapse of the hollow particles can be further suppressed.

(Oil-soluble polymerization initiator)

In the disclosed embodiments, a suspension polymerization method using the oil-soluble polymerization initiator is employed, and an emulsion polymerization method using a water-soluble polymerization initiator is not employed.

The oil-soluble polymerization initiator is not particularly limited, as long as it is a lipophilic one having a solubility in water of 0.2% by mass or less. As the oil-soluble polymerization initiator, examples include, but are not limited to, benzoyl peroxide, lauroyl peroxide, t-butyl peroxide 2-ethylhexanoate, 2,2'-azobis(2,4-dimethylvaleronitrile) and azobis(isobutyronitrile).

When the total mass of the polymerizable monomer is regarded as 100 parts by mass, the content of the oil-soluble polymerization initiator is preferably from 0.1 parts by mass to 10 parts by mass, more preferably from 0.5 parts by mass to 7 parts by mass, and still more preferably from 1 part by mass to 5 parts by mass. When the content of the oil-soluble polymerization initiator is 0.1 parts by mass or more, a polymerization reaction is likely to progress sufficiently. On the other hand, when the content of the oil-soluble polymerization initiator is 10 parts by mass or less, the oil-soluble polymerization initiator is less likely to remain after the end of the polymerization reaction. As a result, an unexpected side reaction is less likely to progress.

(Hydrocarbon solvent)

In the disclosed embodiments, the hydrocarbon solvent functions to form the hollow portion in the interior of the particles.

In the suspension preparation step described later, the suspension in which monomer droplets containing the hydrocarbon solvent are dispersed in the aqueous medium, is obtained. In the suspension preparation step, phase separation occurs in the monomer droplets. As a result, the hydrocarbon solvent with low polarity is likely to collect in the interior of the monomer droplets. In the end, according to their respective polarities, the hydrocarbon solvent is distributed in the interior of the monomer droplets, and the material not containing the hydrocarbon solvent is distributed at the periphery of the monomer droplets.

Then, in the polymerization step described later, the precursor composition containing the precursor particles including the hydrocarbon solvent, is obtained. That is, since the hydrocarbon solvent collects in the interior of the particles, the hollow portion filled with the hydrocarbon solvent is formed in the interior of polymer particles thus obtained (the precursor particles).

The type of the hydrocarbon solvent is not particularly limited. Examples of the hydrocarbon solvent include a solvent with relatively high volatility, such as benzene, toluene, xylene, butane, pentane, hexane, heptane and cyclohexane.

For the hydrocarbon solvent used in the disclosed embodiments, the relative permittivity at 20°C is preferably 3 or less. The relative permittivity is one of the indices of the level of the polarity of a compound. In the case where the relative permittivity of the hydrocarbon solvent is 3 or less and sufficiently small, it is considered that phase separation progresses rapidly in the monomer droplets and a hollow is easily formed.

Examples of solvents having a relative permittivity at 20°C of 3 or less, are as follows. The inside of the parentheses is the value of relative permittivity.

Heptane (1.9), cyclohexane (2.0), benzene (2.3), and toluene (2.4).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The hydrocarbon solvent used in the present embodiments may be a hydrocarbon compound having 5 to 7 carbon atoms. The hydrocarbon compound having 5 to 7 carbon atoms can be easily included in the precursor particles in the polymerization step, and it can be easily removed from the precursor particles in the solvent removal step. The hydrocarbon solvent is particularly preferably a hydrocarbon compound having 6 carbon atoms.

When the total mass of the polymerizable monomer is regarded as 100 parts by mass, the content of the hydrocarbon solvent is preferably from 70 parts by mass to 900 parts by mass, more preferably from 150 parts by mass to 700 parts by mass, and still more preferably from 200 parts by mass to 500 parts by mass. When the content of the hydrocarbon solvent is 70 parts by mass or more, the void ratio of the obtained hollow particles is large. On the other hand, when the content of the hydrocarbon solvent is 900 parts by mass or less, the mechanical properties of the obtained hollow particles are likely to be excellent, and the hollow particles are less likely to fail to maintain the hollow portion.

(Dispersion stabilizer)

The dispersion stabilizer is an agent for dispersing the droplets of the monomer composition in the aqueous medium in the suspension preparation step. In the present disclosure, an inorganic dispersion stabilizer is preferably used as the dispersion stabilizer, from the point of view that the particle diameter of the droplets can be easily controlled in the suspension and the particle size distribution of the obtained hollow particles can be sharp, and that an excessive decrease in the shell thickness is suppressed, and a decrease in the strength of the hollow particles is suppressed. The inorganic dispersion stabilizer can exert such effects especially when the inorganic dispersion stabilizer is used in combination with the above-described particle diameter control agent.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; and a metal hydroxide such as aluminum hydroxide, magnesium hydroxide, calcium hydroxide, barium hydroxide and iron(II)hydroxide. These inorganic dispersion stabilizers may be used alone or in combination of two or more.

Of these inorganic dispersion stabilizers, a sparingly water-soluble inorganic metal salt such as the above-mentioned sulfate, carbonate, phosphate and metal hydroxide is preferred; a metal hydroxide is more preferred; and a magnesium hydroxide is particularly preferred.

In the present disclosure, the sparingly water-soluble inorganic metal salt is preferably an inorganic metal salt such that the solubility in 100 g of water is 0.5 g or less.

The content of the dispersion stabilizer is not particularly limited. With respect to the total mass (100 parts by mass) of the polymerizable monomer and the hydrocarbon solvent, the content of the dispersion stabilizer is preferably from 0.5 parts by mass to 10 parts by mass, and more preferably from 1.0 part by mass to 8.0 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that the suspension cannot pass through a droplet forming machine, can be avoided.

With respect to 100 parts by mass of the aqueous medium, the content of the dispersion stabilizer is generally 2 parts by mass or more and 15 parts by mass or less, and more preferably 3 parts by mass or more and 8 parts by mass or less.

(Aqueous medium)

In the disclosed embodiments, the term "aqueous medium" means any one of water, a hydrophilic solvent and a mixture thereof.

In the disclosed embodiments, the hydrophilic solvent is not particularly limited, as long as it is one that mixes with water sufficiently and does not develop phase separation. Examples of the hydrophilic solvent include alcohols such as methanol and ethanol; tetrahydrofuran (THF); and dimethyl sulfoxide (DMSO).

Among the aqueous media, water is preferably used in terms of its high polarity. When a mixture of water and a hydrophilic solvent is used, from the viewpoint of forming the monomer droplets, it is important that the polarity of the entire mixture is not too low. For example, the mixing ratio (mass ratio) between water and the hydrophilic solvent may be set to water : hydrophilic solvent = 99:1 to 50:50.

The mixture liquid prepared in this step is a composition in such a state, that the above-described polymerizable monomer, oil-soluble polymerization initiator, hydrocarbon solvent, dispersion stabilizer and aqueous medium are simply mixed and appropriately stirred. In the mixture liquid, an oil phase containing the above-described polymerizable monomer, oil-soluble polymerization initiator and hydrocarbon solvent, is dispersed with a size of a particle diameter of approximately several millimeters in the aqueous medium. The dispersion state of these materials in the mixture liquid can be observed with the naked eye, depending on the types of the materials.

In this step, the mixture liquid may be prepared by mixing the oil phase containing the polymerizable monomer, the oil-soluble polymerization initiator and the hydrocarbon solvent with the aqueous phase containing the dispersion stabilizer and the aqueous medium. As just described, by mixing the oil and aqueous phases together, particles uniform in composition can be formed.

(2) Suspension preparation step

The suspension preparation step includes suspending the mixture liquid to prepare a suspension in which the droplets of the monomer composition containing the polymerizable monomer and the hydrocarbon solvent are dispersed in the aqueous medium.

In the suspension prepared in the suspension preparation step, the droplets of the monomer composition containing the above-described polymerizable monomer, oil-soluble polymerization initiator and hydrocarbon solvent and having a volume average particle diameter of approximately from 1 um to 60 $\mu$m, are dispersed uniformly in the aqueous medium. Such droplets of the monomer composition are difficult to observe with the naked eye and can be observed with known observation equipment such as an optical microscope.

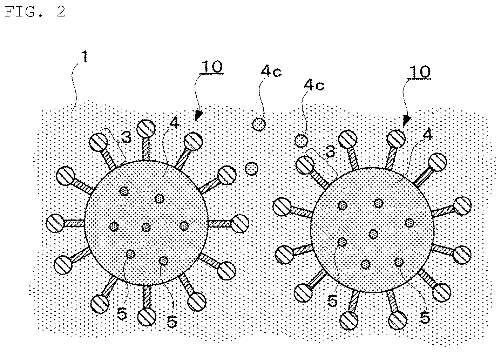

FIG. 2 is a schematic diagram showing an embodiment of the suspension in the suspension preparation step. Each droplet 10 of the monomer composition in FIG. 2 schematically shows a cross section thereof. FIG. 2 is merely a schematic diagram, and the suspension in the present disclosure is not limited to that shown in FIG. 2. A part of FIG. 2 corresponds to the diagram (2) of FIG. 1 described above.

FIG. 2 shows a state where the droplets 10 of the monomer composition and the polymerizable monomer 4c dispersed in the aqueous medium 1, are dispersed in the aqueous medium 1. Each droplet 10 is formed by the oil-soluble monomer composition 4 and a dispersion stabilizer 3 surrounding the periphery of the oil-soluble monomer composition 4.

The monomer composition contains the oil-soluble polymerization initiator 5, the polymerizable monomer and the hydrocarbon solvent (none of them is illustrated).

Each droplet 10 is a minute oil droplet which contains the monomer composition 4, and the oil-soluble polymerization initiator 5 generates polymerization initiating radicals in the interior of the minute oil droplet. Therefore, the precursor particles with a target particle diameter can be produced without excessively growing the minute oil droplet.

In such a suspension polymerization method using the oil-soluble polymerization initiator, there is no opportunity for the polymerization initiator to come into contact with the polymerizable monomer 4c dispersed in the aqueous medium 1. Thus, the generation of surplus polymer particles (e.g., solid particles having a relatively small particle diameter) in addition to the target resin particles having the hollow portion, can be suppressed by using the oil-soluble polymerization initiator.

In the suspension preparation step, the method for forming the droplets of the monomer composition is not particularly limited. As the method, examples include, but are not limited to, a droplets forming method using an apparatus capable of performing strong stirring, such as an (in-line type) emulsifying disperser (manufactured by Pacific Machinery & Engineering Co., Ltd.; product name: MILDER) and a high-speed emulsifying disperser (manufactured by PRIMIX Corporation; product name: T.K. HOMOMIXER MARK II Type).

In the suspension preparation step, as described above, since phase separation occurs in the droplets of the monomer composition, the hydrocarbon solvent with low polarity is likely to collect in the interior of the droplets. As a result, in the obtained droplets, the hydrocarbon solvent is distributed in the interior thereof, and the material not containing the hydrocarbon solvent is distributed at the periphery thereof.

In the suspension preparation step, the suspension may be prepared by a membrane emulsification. In the case of preparing the suspension by the membrane emulsification method, for example, the oil phase containing the polymerizable monomer, the oil-soluble polymerization initiator and the hydrocarbon solvent and the aqueous phase containing the dispersion stabilizer and the aqueous medium are prepared in the mixture liquid preparation step, and then the suspension is prepared by the membrane emulsification method. The membrane emulsification method is a method for obtaining, by extruding a to-be-dispersed phase liquid into a continuous phase through the fine pores of a porous membrane, a suspension in which fine droplets of the dispersed phase are dispersed in the continuous phase. The dispersed phase means a liquid phase dispersed in the form of fine droplets, and the continuous phase means a liquid phase surrounding the dispersed phase droplets. In the present embodiments, any of a direct membrane emulsification method and a membrane emulsification method with pre-emulsification and the like may be employed, as long as they are membrane emulsification methods using the oil phase as the dispersed phase and the aqueous phase as the continuous phase.

In the membrane emulsification method, a membrane emulsification system (such as MN-20 manufactured by SPG Technology Co., Ltd.) and a membrane with pores of a specific pore diameter are used. As the porous membrane applicable to the membrane emulsification method, examples include, but are not limited to, inorganic porous membranes such as Shirasu porous glass (SPG) membrane, and an organic porous membrane such as a PTFE membrane.

In the membrane emulsification method, the particle diameter of obtained fine droplets is defined as the pore diameter of the porous membrane. Depending on the components of the dispersed phase, the particle diameter of the fine droplets affects the number average particle diameter of the obtained hollow particles. Accordingly, importance is given to the selection of the pore diameter of the porous membrane. For example, in the case of using the Shirasu porous glass (SPG) membrane, preferably, a pore diameter of 0.1 um to 5.0 um is selected as the pore diameter of the membrane.

In the suspension preparation step using the membrane emulsification method, the suspension is prepared by membrane emulsification in which the oil phase and the aqueous phase are formed into the dispersed phase and the continuous phase, respectively, by use of the membrane emulsification system and the porous membrane.

In the present embodiments, the suspension preparation step is not limited to the method described here.

(3) Polymerization step

The polymerization step includes polymerizing the above-described suspension to prepare the precursor composition in which the precursor particles including the hydrocarbon solvent are dispersed in the aqueous medium. The precursor particles are formed by polymerization of the polymerizable monomer contained in the droplets of the monomer composition.

The polymerization system is not particularly limited. For example, a batch system, a semicontinuous system or a continuous system may be employed. The polymerization temperature is preferably from 40°C to 80°C, and more preferably from 50°C to 70°C. The polymerization reaction time is preferably from 1 hour to 20 hours, and more preferably from 2 hours to 15 hours.

In the polymerization step, the shell portion of the droplets of the monomer composition, which contain the hydrocarbon solvent in the interior, polymerizes. Accordingly, as described above, the hollow portion filled with the hydrocarbon solvent is formed in the interior of the obtained precursor particles.

(4) Solid-liquid separation step

The solid-liquid separation step includes performing solid-liquid separation of the above-described precursor composition to obtain the precursor particles.

The method of performing the solid-liquid separation of the precursor composition is not particularly limited, as far as it is a method by which the solid component containing the precursor particles and the liquid component containing the aqueous medium are separated from each other, and a known method may be used. Examples of the solid-liquid separation method include a centrifugation method, a filtration method, and stillstanding separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

The solvent removal step includes removing the hydrocarbon solvent from the precursor particles to obtain the hollow particles.

The hydrocarbon solvent may be removed from the precursor particles in a gaseous atmosphere or liquid.

In this step, the term "in a gaseous atmosphere" includes "in an environment where no liquid component exists in the outside of the precursor particles" and "in an environment where only a very small amount of liquid component at a level that does not influence the removal of the hydrocarbon solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder.

The method of removing the hydrocarbon solvent from the precursor particles is not particularly limited, and a known method may be employed. Examples of the method of removing the hydrocarbon solvent from the precursor particles in a gaseous atmosphere, include a reduced pressure drying method, a heat drying method, a flash drying method, and the combination of these methods.

Especially, in the case of using the heat drying method, the heating temperature needs to be set to more than or equal to the boiling point of the hydrocarbon solvent and less than or equal to the highest temperature at which the shell structure of the hollow particles does not collapse. Accordingly, depending on the composition of the shell and the type of the hydrocarbon solvent in the precursor particles, the heating temperature may be from 50°C to 250°C, may be from 100°C to 240°C, or may be from 150°C to 220°C, for example. Also, the heating time may be from 1 hour to 24 hours. It is preferably from 2 hours to 15 hours, and more preferably from 3 hours to 10 hours.

The hydrocarbon solvent in the interior of the precursor particles is substituted with the outside gas by the drying operation in the gaseous atmosphere. As a result, the hollow particles in which the hollow portion is filled with gas, are obtained.

The drying atmosphere is not particularly limited. As the drying atmosphere, examples include, but are not limited to, an air atmosphere, an oxygen atmosphere, a nitrogen atmosphere, an argon atmosphere and a vacuum atmosphere. Further, by filling the interior of the hollow particles with gas once and then performing reduced pressure drying, hollow particles in which the interior is evacuated are also temporarily obtained.

As another method, the hydrocarbon solvent may be removed as follows: the precursor composition obtained in the polymerization step, which is in the form of slurry, is not subjected to solid-liquid separation and, instead, in the slurry containing the precursor particles and the aqueous medium, the hydrocarbon solvent included in the precursor particles is substituted with the aqueous medium of the slurry, thereby removing the hydrocarbon solvent.

In this method, at a temperature equal to or more than the temperature obtained by subtracting 35°C from the boiling point of the hydrocarbon solvent, an inert gas is bubbled into the precursor composition. Accordingly, the hydrocarbon solvent can be removed from the precursor particles.

When the hydrocarbon solvent is a mixed solvent containing several types of hydrocarbon solvents and it has several boiling points, the boiling point of the hydrocarbon solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrocarbon solvent, and more preferably a temperature equal to or more than the temperature obtained by subtracting 20°C from the boiling point of the hydrocarbon solvent, from the viewpoint of reducing the amount of the residual hydrocarbon solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrocarbon solvent, the bubbling condition is appropriately controlled so that the hydrocarbon solvent can be removed from the precursor particles. The bubbling condition is not particularly limited. For example, the inert gas may be bubbled in an amount of 1 L/min to 3 L/min for 1 hour to 10 hours.

By this method, an aqueous slurry in which the aqueous medium is included in the precursor particles, is obtained. The slurry is subjected to solid-liquid separation to obtain hollow particles, and the aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrocarbon solvent from the precursor particles in the gaseous atmosphere, is compared to the method for obtaining the hollow particles in which the hollow portion is filled with gas, by substituting, in the slurry containing the precursor particles and the aqueous medium, the hydrocarbon solvent included in the precursor particles with the aqueous medium of the slurry, subjecting the slurry to solid-liquid separation, and then removing the aqueous medium from the precursor particles in the gaseous atmosphere. As a result, the former method is advantageous in that the hollow particles are less likely to collapse in the hydrocarbon solvent removal step, and the latter method is advantageous in that the amount of the residual hydrocarbon solvent is decreased by bubbling the inert gas.

In the case of substituting the hydrocarbon solvent included in the precursor particles with water, there is a problem in that obtained hollow particles collapse if the same volume of water as the hydrocarbon solvent released from the particles, is not introduced into the particles. For example, a possible means to prevent the problem is thought to be as follows: the pH of the slurry is adjusted to 7 or more; the shell of the particles is swollen with alkali; and then the hydrocarbon solvent is removed from the particles. In this case, the shell of the particles obtains flexibility. Accordingly, the substitution of the hydrocarbon solvent in the interior of the particles with water progresses quickly.

(6) Others

In addition to the steps (1) to (5) mentioned above, the following washing step (6-a) and the following hollow portion re-substitution step (6-b) may be added, for example.

(6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably controlled to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Hollow portion re-substitution step

The hollow portion re-substitution step includes resubstituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application thereof.

[Acid-modified polyolefin-based resin]

The resin composition of the present disclosure contains the acid-modified polyolefin-based resin. The acid-modified polyolefin-based resin is polyolefin-based resin in which an acidic group is introduced.

As the polyolefin-based resin used for the acid-modified polyolefin-based resin, examples include, but are not limited to, the same type of polyolefin-based resin as the polyolefin-based resin used as the thermoplastic plastomer. On the other hand, polyolefin-based resin such that the weight-average molecular weight is in the below-described preferred range, is preferably used. As the polyolefin-based resin used for the acid-modified polyolefin-based resin, due to excellent affinity for the preferred thermoplastic plastomer described above, polyethylene-based resin, polypropylene-based resin and propylene-$\alpha$-olefin copolymer are preferred. Of them, polypropylene-based resin is particularly preferred.

As the acid-modified polyolefin-based resin used in the resin composition of the present disclosure, the carboxylic acid-modified polyolefin-based resin in which a carboxyl group or a carboxylic anhydride group is introduced as the acidic group, is particularly preferred.

The carboxylic acid-modified polyolefin-based resin can be obtained by, during the polymerization of or after the polymerization of the polyolefin-based resin, adding at least one selected from $\alpha,\beta$-unsaturated carboxylic acids and acid anhydrides thereof to the system. The carboxylic acid-modified polyolefin-based resin may have a configuration such that the $\alpha,\beta$-unsaturated carboxylic acids and acid anhydrides thereof are introduced in the main chain of the polyolefin-based resin by addition reaction, and chemical bonds are formed between the polyolefin-based resin, the $\alpha,\beta$-unsaturated carboxylic acids and the acid anhydrides thereof; the carboxylic acid-modified polyolefin-based resin may have a configuration such that chemical bonds are not formed between the polyolefin-based resin, the $\alpha,\beta$-unsaturated carboxylic acids and the acid anhydrides thereof, and the $\alpha,\beta$-unsaturated carboxylic acids and the acid anhydrides thereof are dispersed in the polyolefin-based resin; or the carboxylic acid-modified polyolefin-based resin may have a combination of these configurations.

As the $\alpha,\beta$-unsaturated carboxylic acid and the acid anhydride thereof, examples include, but are not limited to, (meth)acrylic acid, maleic acid, fumaric acid, itaconic acid, citraconic acid and acid anhydrides thereof. Of them, maleic anhydride and maleic acid are preferred, and maleic anhydride is more preferred.

As the method for introducing the acidic group in the polyolefin-based resin, the above-described method or a conventionally-known method of acid modification of resin, may be employed.

The lower limit of the weight-average molecular weight of the acid-modified polyolefin-based resin contained in the resin composition of the present disclosure, is preferably 10,000 or more, more preferably 15,000 or more, still more preferably 20,000 or more, even more preferably 30,000 or more, and particularly preferably 40,000 or more. The upper limit of the weight-average molecular weight thereof is preferably 60,000 or less, more preferably 55,000 or less, and still more preferably 50,000 or less. When the weight-average molecular weight of the acid-modified polyolefin-based resin is equal to or more than the lower limit value and equal to or less than the upper limit value, the affinity thereof for both the thermoplastic plastomer and the hollow particles is increased. Accordingly, when the resin composition is molded into a molded body, a deterioration in the physical properties of the molded body is likely to be suppressed.

In the present disclosure, the weight-average molecular weight of the resin is the polystyrene equivalent weight-average molecular weight of the resin measured by gel permeation chromatography (GPC).

The acid value of the acid-modified polyolefin-based resin is 3.5 mgKOH/g or more, preferably 10 mgKOH/g or more, more preferably 15 mgKOH/g or more, and still more preferably 20 mgKOH/g. When the acid value of the acid-modified polyolefin-based resin is equal to or more than the lower limit value, excellent affinity thereof for both the thermoplastic plastomer and the hollow particles is obtained. Accordingly, when the resin composition is molded into a molded body, a deterioration in the physical properties of the molded body can be suppressed. The upper limit of the acid value of the acid-modified polyolefin-based resin is not particularly limited. From the viewpoint of affinity for the thermoplastic plastomer, the upper limit of the acid value of the acid-modified polyolefin-based resin is preferably 150 mgKOH/g or less, more preferably 100 mgKOH/g or less, still more preferably 80 mgKOH/g or less, even more preferably 60 mgKOH/g or less, yet more preferably 50 mgKOH/g or less, and particularly preferably 30 mgKOH/g.

In the resin composition of the present disclosure, the content of the acid-modified polyolefin-based resin is not particularly limited. With respect to 100 parts by mass of the hollow particles, the content of the acid-modified polyolefin-based resin is preferably from 10 parts by mass to 150 parts by mass, more preferably from 20 parts by mass to 100 parts by mass, and still more preferably from 30 parts by mass to 70 parts by mass. When the content of the acid-modified polyolefin-based resin is equal to or more than the lower limit value and the resin composition is molded into a molded body, a deterioration in the physical properties of the molded body can be suppressed, and an excellent effect of increasing the mechanical strength of the molded body is exerted. When the content of the acid-modified polyolefin-based resin is equal to or less than the upper limit value, the thermoplastic plastomer and the hollow particles can be sufficiently contained in the resin composition. Accordingly, the resin composition can be a lightweight resin composition having excellent strength.

[Other additives]

In addition to the above-described thermoplastic plastomer, hollow particles and acid-modified polyolefin-based resin, the resin composition of the present disclosure may contain additives as needed, such as a UV absorber, a colorant, a thermal stabilizer and a filler, to the extent that does not impair the effects of the present disclosure.

The resin composition of the present disclosure may further contain organic or inorganic fibers such as carbon fibers, glass fibers, aramid fibers and polyethylene fibers.

As the applications of the resin composition of the present disclosure, examples include the same applications as those of the molded body described later.

[Method for producing resin composition]

The method for producing the resin composition of the present disclosure is not particularly limited, and a method used for producing a conventional resin composition may be used. For example, the resin composition of the present disclosure can be obtained by mixing the components such as the thermoplastic plastomer, the hollow particles, the acid-modified polyolefin-based resin, and other additives which are added as needed, and melt-kneading the mixture.

The melt-kneading is not particularly limited and may be carried out by a known method. For example, it may be carried out by use of a melt-kneading device such as a uniaxial extruder, a biaxial extruder, a banbury mixer, a heating roller, and various kinds of kneaders.

The melt-kneading temperature is not particularly limited, and it may be a temperature at which the thermoplastic plastomer melts. From the viewpoint of suppressing a collapse of the hollow particles, the temperature is preferably 250°C or less. When the resin composition of the present disclosure is molded into pellets, for example, after the melt-kneading, the resin composition can be molded into pellets by a known molding method such as extrusion molding and injection molding.

2. Molded body

In the molded body of the resin composition of the present disclosure, a collapse of the hollow particles is suppressed. Accordingly, it is a molded body such that a decrease in the void ratio is suppressed and the weight is reduced. As the molding method for obtaining the molded body of the resin composition of the present disclosure, a molding method that is carried out in a heat-pressing condition, such as injection molding and compression molding, is preferably used since the resin composition uses the hollow particles that are less likely to collapse. Also, a known molding method such as extrusion molding, blow molding, calendering, inflation molding, stretch molding and solution casting may be used.

The form of the molded body of the resin composition of the present disclosure may be any form such as a sheet form, a film form, a plate form, a tube form, and various kinds of other three-dimensional forms. When the molded body contains fibers, the fibers in the molded body may be in a non-woven fabric form.

As the applications of the molded body of the resin composition of the present disclosure, examples include, but are not limited to, members such as a light reflective material, a heat insulation material, a sound insulation material and a low dielectric material, which are used in various kinds of fields such as the automotive field, the electronic field, the electric field, the architecture field, the aviation field and the space field; food containers; footwears such as sports shoes and sandals; components of household appliances; components of bicycles; stationery supplies; and tools.

Examples

Hereinbelow, the present disclosure is described more specifically using examples and comparative examples. However, the present disclosure is not limited to these examples. Also, "part(s)" and "%" are on a mass basis unless otherwise specified.

As the acid-modified polyolefin-based resin, PP1 (maleic anhydride-modified polypropylene manufactured by Sanyo Chemical Industries, Ltd., product name: UMEX 1001) and PP2 (maleic anhydride-modified polypropylene manufactured by Sanyo Chemical Industries, Ltd., product name: UMEX 1010) were prepared.

As a comparative unmodified polyolefin-based resin, PP3 (low-molecular-weight polypropylene manufactured by Sanyo Chemical Industries, Ltd., product name: VISCOL 660-P) was prepared.

For the acid-modified polyolefin-based resin and the comparative unmodified polyolefin-based resin, Table 1 shows the type of the resin used as the raw material, the type of the acid used for acid modification, and the acid value and weight-average molecular weight (Mw).

[Table 1]

Table 1

|  | Resin | Acid-modified species | Acid value (mgKOH/g) | Mw |
|---|---|---|---|---|
| PP1 | Polypropylene | Maleic anhydride | 26 | 45000 |
| PP2 | Polypropylene | Maleic anhydride | 52 | 30000 |
| PP3 | Polypropylene | Not modified | 0 | 30000 |

[Production Example 1: Production of hollow particles]

(1) Mixture liquid preparation step

First, the following materials were mixed to produce an oil phase.

Ethylene glycol dimethacrylate: 100 parts
2,2'-Azobis(2,4-dimethylvaleronitrile) (an oil-soluble polymerization initiator manufactured by Wako Pure Chemical Industries, Ltd., product name: V-65): 3 parts
Rosin acid: 0.0044 parts
Cyclohexane: 187 parts

Next, in a stirring tank, under a room temperature condition, an aqueous solution in which 5.5 parts of sodium hydroxide (an alkali metal hydroxide) was dissolved in 55 parts of ion-exchanged water, was gradually added under stirring to an aqueous solution in which 7.8 parts of magnesium chloride (a water-soluble polyvalent metal salt) was dissolved in 225 parts of ion-exchanged water, thereby preparing a magnesium hydroxide colloidal dispersion (a sparingly water-soluble metal hydroxide colloidal dispersion). The obtained dispersion was used as an aqueous phase.

The obtained aqueous phase and oil phase were mixed, thereby preparing a mixture liquid.

(2) Suspension preparation step

The mixture liquid obtained in the mixture liquid preparation step was stirred with a disperser (product name: HOMO MIXER, manufactured by: PRIMIX Corporation) for one minute at a rotational frequency of 4,000 rpm to be suspended, thereby preparing a suspension in which droplets of a monomer composition including cyclohexane, were dispersed in water.

(3) Polymerization step

In a nitrogen atmosphere, the suspension obtained in the suspension preparation step was stirred for 4 hours in a temperature condition of 65°C, thereby performing a polymerization reaction. By this polymerization reaction, a precursor composition containing precursor particles including cyclohexane, was prepared.

(4) Washing step and solid-liquid separation step

The precursor composition obtained in the polymerization step was washed with dilute sulfuric acid (25°C, 10 minutes) to bring the pH of the composition to 5.5 or less. Next, water was separated therefrom by filtration. Then, 200 parts of ion-exchanged water was added to the resultant to make a slurry again, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including cyclohexane.

(5) Solvent removal step

The precursor particles obtained in the solid-liquid separation step were subjected to heating treatment for 6 hours with a vacuum dryer in a vacuum condition at 200°C, thereby removing the hydrocarbon solvent from the hollow portion. Accordingly, the hollow particles of Production Example 1 were obtained. The obtained hollow particles had a volume average particle diameter of 10.6 um and a void ratio of 65%. From the scanning electron microscopy observation result and void ratio value of the obtained hollow particles, the particles were confirmed to be spherical and to have a hollow portion.

[Example 1]

First, 85 parts of polypropylene (manufactured by: Mitsubishi Chemical Corporation, product name: MA1B, specific gravity: 0.90 g/cm$^3$, acid value: 0 mgKOH/g, SP value: 8.0 (cal/cm$^3$)$^{1/2}$) as the thermoplastic plastomer, 10 parts of the hollow particles obtained in Production Example 1, and 5 parts (50 parts with respect to 100 parts of the hollow particles) of the above-mentioned PP1 as the acid-modified polypropylene-based resin, were mixed by a blender, thereby obtaining the resin composition of Example 1.

Next, the obtained resin composition was kneaded by a biaxial kneader (product name: TEM-35B, manufactured by: Toshiba Machine Co., Ltd.) in the following kneading condition, extruded and then pelletized, thereby obtaining pellets of the resin composition.

<Kneading condition>

Screw diameter: 37 mm, L/D = 32
Screw rotational frequency: 250 rpm
Resin temperature: 190°C
Feed rate: 6 kg/h

The obtained pellets of the resin composition were dried by heating at 80°C for 6 hours. Then, using an injection molding machine, the dried pellets were molded in the following molding condition, thereby obtaining a molded body (size: 80 mm × 10 mm × 4 mm (thickness)).

<Molding condition>

Cylinder temperature: 200°C
Mold temperature: 70°C
Injection pressure: 70 MPa

[Examples 2 to 5 and Comparative Examples 1 to 3]

The resin composition and molded body of each of Examples 2 to 5 and Comparative Examples 1 to 3 were obtained in the same manner as Example 1, except that the type and amount of the added thermoplastic plastomer or the type and amount of the added acid-modified polyolefin-based resin were changed according to Table 2.

[Reference Example 1]

The molded body of Reference Example 1 was obtained in the same manner as Example 1, except that instead of the resin composition obtained in Example 1, the polypropylene (PP) used as the thermoplastic plastomer in Examples 1 to 4 was used.

[Reference Example 2]

The molded body of Reference Example 2 was obtained in the same manner as Example 1, except that instead of the resin composition obtained in Example 1, the high density polyethylene (HDPE) used as the thermoplastic plastomer in Example 5 was used.

[Evaluation]

The physical properties of the molded body obtained in each of the examples and comparative examples, were measured. The measurement results are shown in Table 2.

(1) Tensile strength

In accordance with JIS-K7161-2, using a multipurpose test specimen as a test specimen, a tensile test was carried out in the following condition to measure the tensile strength of the test specimen.

Test speed: 50 mm/min
Chuck distance: 115 mm
Test environment: 23°C, 50% RH

(2) Flexural strength

In accordance with JIS K7171, using a piece cut out from the middle parallel part of a multipurpose test specimen as a test specimen, a flexural test was carried out in the following condition to measure the flexural strength of the test specimen.

Test speed: 2 mm/min
Span: 64 mm
Test environment: 23°C, 50% RH

(3) Flexural modulus

The flexural test was carried out in the same condition as the flexural strength measurement to measure the flexural modulus.

[Table 2]

Table 2

| | Resin composition | | | | | Physical properties of injectionmolded body | | |
|---|---|---|---|---|---|---|---|---|
| | Thermoplastic plastomer | | Hollow particles | Acid-modified polyolefin-based resin | | Tensile strength (MPa) | Flexural strength (MPa) | Flexural modulus (MPa) |
| | Type | Amount (Parts) | Amount (Parts) | Type | Amount (Parts) | | | |
| Example 1 | PP | 85 | 10 | PP1 | 5 | 31.6 | 42.2 | 1370 |
| Example 2 | PP | 85 | 10 | PP2 | 5 | 27.7 | 40.0 | 1330 |
| Example 3 | PP | 88 | 10 | PP1 | 2 | 26.5 | 37.2 | 1310 |
| Example 4 | PP | 75 | 10 | PP1 | 15 | 27.2 | 38.3 | 1290 |
| Example 5 | HDPE | 85 | 10 | PP1 | 5 | 12.2 | 27.5 | 1170 |
| Comparative Example 1 | PP | 90 | 10 | - | - | 23.1 | 35.0 | 1240 |
| Comparative Example 2 | PP | 85 | 10 | PP3 (Unmodified) | 5 | 22.8 | 32.0 | 1220 |
| Comparative Example 3 | HDPE | 85 | 10 | PP3 (Unmodified) | 5 | 8.4 | 20.2 | 980 |
| Reference Example 1 | PP | 100 | - | - | - | 33.2 | 40.8 | 1360 |
| Reference Example 2 | HDPE | 100 | - | - | - | 12.3 | 26.3 | 1150 |

In Table 2, PP denotes polypropylene (manufactured by: Mitsubishi Chemical Corporation, product name: MA1B, specific gravity: 0.90 g/cm$^3$, acid value: 0 mgKOH/g, SP value: 8.0 (cal/cm$^3$)$^{1/2}$), and HDPE denotes high density polyethylene (manufactured by: Mitsubishi Chemical Corporation, product name: NOVATEC-HD HJ590N, specific gravity: 0.96 g/cm$^3$, acid value: 0 mgKOH/g, SP value: 8.0 (cal/cm$^3$)$^{1/2}$).

The resin compositions obtained in Examples 1 to 4 and Comparative Examples 1 and 2 contained the polypropylene as the thermoplastic plastomer and the hollow particles. However, when molded into a molded body, the resin composition of Comparative Example 1, which did not contain the acid-modified polyolefin-based resin, and the resin composition of Comparative Example 2, which contained the unmodified low-molecular-weight polypropylene instead of the acid-modified polyolefin-based resin, showed a large decrease in the tensile strength, flexural strength and flexural modulus, compared to the molded body of the polypropylene of Reference Example 1. Meanwhile, when molded into a molded body, the resin compositions of Examples 1 to 4, which contained the acid-modified polyolefin-based resin, showed almost no decrease or showed a slight increase in the tensile strength, flexural strength and flexural modulus, compared to the molded body of the polypropylene of Reference Example 1. Accordingly, even though they contained the hollow particles, when they were molded into a molded body each, a deterioration in the physical properties of the molded body was suppressed.

The resin compositions obtained in Example 5 and Comparative Example 3 contained the high density polyethylene as the thermoplastic plastomer and the hollow particles. However, when molded into a molded body, the resin composition of Comparative Example 3, which contained the unmodified low-molecular-weight polypropylene instead of the acid-modified polyolefin-based resin, showed a large decrease in the tensile strength, flexural strength and flexural modulus, compared to the molded body of the high density polyethylene of Reference Example 2. Meanwhile, when molded into a molded body, the resin composition of Example 5, which contained the acid-modified polyolefin-based resin, showed almost no decrease or showed a slight increase in the tensile strength, flexural strength and flexural modulus, compared to the molded body of the high density polyethylene of Reference Example 2. Accordingly, even though it contained the hollow particles, when it was molded into a molded body, a deterioration in the physical properties of the molded body was suppressed.

Reference Signs List

1. Aqueous medium
2. Low polarity material
3. Dispersion stabilizer
4. Monomer composition
4a. Hydrocarbon solvent
4b. Material not containing hydrocarbon solvent
4c. Polymerizable monomer dispersed in aqueous medium
5. Oil-soluble polymerization initiator
6. Shell
8. Hollow portion
10. Droplet of monomer composition
20. Precursor particle
100. Hollow particle

## Claims

1. A resin composition comprising:

   a thermoplastic plastomer having an acid value of less than 3.0 mgKOH/g,
   hollow particles which comprise a shell containing a resin and a hollow portion surrounded by the shell and which contain, as the resin, a polymer in which from 30 parts by mass to 100 parts by mass of a crosslinkable monomer unit is contained in 100 parts by mass of all monomer units, and
   an acid-modified polyolefin-based resin having an acid value of 3.5 mgKOH/g or more.

2. The resin composition according to Claim 1, wherein a content of the acid-modified polyolefin-based resin is from 10 parts by mass to 150 parts by mass, with respect to 100 parts by mass of the hollow particles.

3. The resin composition according to Claim 1 or 2, wherein a weight-average molecular weight of the acid-modified polyolefin-based resin is 15,000 or more.

4. The resin composition according to any one of Claims 1 to 3, wherein the acid-modified polyolefin-based resin is a carboxylic acid-modified polyolefin-based resin.

5. The resin composition according to any one of Claims 1 to 4, wherein the thermoplastic plastomer is a polyolefin-based resin.

FIG. 1

(1)

(2)

(3)

(4)

(5)

FIG. 2

**INTERNATIONAL SEARCH REPORT**

| International application No. |
|---|
| **PCT/JP2021/035539** |

| A. | CLASSIFICATION OF SUBJECT MATTER |
|---|---|

*C08L 23/00*(2006.01)i; *C08L 23/26*(2006.01)i; *C08L 33/04*(2006.01)i
FI: C08L23/00; C08L33/04; C08L23/26

According to International Patent Classification (IPC) or to both national classification and IPC

| B. | FIELDS SEARCHED |
|---|---|

Minimum documentation searched (classification system followed by classification symbols)

C08L23/00; C08L23/26; C08L33/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/066704 A1 (ZEON CORP) 02 April 2020 (2020-04-02)<br>entire text | 1-5 |
| A | WO 2020/066705 A1 (ZEON CORP) 02 April 2020 (2020-04-02)<br>entire text | 1-5 |
| A | JP 2019-14798 A (PANASONIC IP MAN CORP) 31 January 2019 (2019-01-31)<br>entire text | 1-5 |
| A | JP 2019-6938 A (PANASONIC IP MAN CORP) 17 January 2019 (2019-01-17)<br>entire text | 1-5 |
| A | WO 2017/014064 A1 (MATSUMOTO YUSHI-SEIYAKU CO., LTD) 26 January 2017 (2017-01-26)<br>entire text | 1-5 |
| A | JP 2016-169274 A (MATSUMOTO YUSHI SEIYAKU KK) 23 September 2016 (2016-09-23)<br>entire text | 1-5 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2021/035539** |

**C.    DOCUMENTS CONSIDERED TO BE RELEVANT**

| Category* | Citation of document, with indication, where appropriate, of the relevant passages | Relevant to claim No. |
|---|---|---|
| A | JP 1-202683 A (KAGAKU GIJUTSUCHO HOSHASEN IGAKU SOGO KENKYUSHOCHO) 15 August 1989 (1989-08-15) entire text | 1-5 |

Form PCT/ISA/210 (second sheet) (January 2015)

**INTERNATIONAL SEARCH REPORT**
Information on patent family members

International application No.

**PCT/JP2021/035539**

| Patent document cited in search report | | | Publication date (day/month/year) | Patent family member(s) | | | Publication date (day/month/year) |
|---|---|---|---|---|---|---|---|
| WO | 2020/066704 | A1 | 02 April 2020 | (Family: none) | | | |
| WO | 2020/066705 | A1 | 02 April 2020 | (Family: none) | | | |
| JP | 2019-14798 | A | 31 January 2019 | CN | 109206737 | A | |
| JP | 2019-6938 | A | 17 January 2019 | CN | 109124469 | A | |
| WO | 2017/014064 | A1 | 26 January 2017 | US full text CN KR | 2018/0208733 107849286 10-2018-0034504 | A1 A A | |
| JP | 2016-169274 | A | 23 September 2016 | (Family: none) | | | |
| JP | 1-202683 | A | 15 August 1989 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020066704 A

**Non-patent literature cited in the description**

- **J. BRANDRUP et al.** Polymer Handbook. John Wiley & Sons, Inc, 1999, 675-714

- Kagaku Binran, Kiso Hen, Kaitei 4 Ban. Maruzen Publishing Co., Ltd, 30 September 1993, II-498-II-503